# EUROPEAN PATENT APPLICATION

(11) **EP 3 937 111 A1**
(43) Date of publication of application: **12.01.2022**
(21) Application number: 19917593.6
(22) Date of filing: 05.03.2019
(51) Int. Cl.: G06Q 50/04

(54) **FACILITY INTRODUCTION ASSISTING SYSTEM**

(71) Applicant: Fuji Corporation, Chiryu-shi, Aichi 472-8686 (JP)
(72) Inventor: HIGASHIDA, Akihiro, Chiryu-shi, Aichi 472-8686 (JP); KODAMA, Seigo, Chiryu-shi, Aichi 472-8686 (JP); FUJITA, Masatoshi, Chiryu-shi, Aichi 472-8686 (JP)
(74) Representative: Grünecker Patent- und Rechtsanwälte PartG mbB
(86) International application number: PCT/JP2019/008562
(87) International publication number: WO 2020/178975

(57) **Abstract**

A facility introduction assisting system for providing assist when a customer introduces a facility, includes a receiving section which receives an introduction request of the facility from the customer, a simulation section which performs a simulation using a model of the facility in a virtual space, a proposal section which proposes to the customer a facility to be introduced together with a result of a simulation including a video of the model in the simulation, and an approval section which approves introduction of the facility to be introduced on a condition that the customer approves the result of the simulation.

## Description

### Technical Field

The present specification discloses a facility introduction assisting system.

### Background Art

Conventionally, a system for recommending candidates of facilities or devices to be introduced to a customer has been proposed. For example, a system of Patent Literature 1 extracts additional optional devices of a target facility as recommendation candidates based on an operation history or a use state of the target facility such as a building facility, and performs evaluation by simulation when the recommendation candidates are applied. Then, the system determines whether to recommend the recommendation candidate from a result of the evaluation by the simulation, and outputs the recommendation candidate to recommend the recommendation candidate to the customer when it is determined to recommend.

### Patent Literature

Patent Literature 1: JP-A-2012-226460

### Summary of the Invention

### Technical Problem

In the above-described system, since the recommendation candidate is output and recommended to the customer, it may be difficult for the customer to ascertain details of the evaluation result by the simulation. When the customer introduces the facility without ascertaining the details of the simulation, it is not preferable since a change request of the facility or the like from the customer frequently occurs after the introduction of the facility, and thus, it takes time and cost to respond to the request.

A main object of the present disclosure is to more smoothly introduce a facility by reliably causing the customer to recognize a simulation result of the facility to be introduced.

### Solution to Problem

The present disclosure takes the following means to achieve the main object described above.

According to an aspect of the present disclosure, there is provided a facility introduction assisting system for providing assist when a customer introduces a facility, the facility introduction assisting system including: a receiving section configured to receive an introduction request of the facility from the customer; a simulation section configured to perform a simulation using a model of the facility in a virtual space; a proposal section configured to propose to the customer a facility to be introduced together with a result of a simulation including a video of the model in the simulation; and an approval section configured to approve introduction of the facility to be introduced on a condition that the customer approves the result of the simulation.

In the facility introduction assisting system of the present disclosure, the simulation is performed using the model of the facility in a virtual space, the facility to be introduced is proposed to the customer together with the result including the video of the model in the simulation, and the introduction of the facility to be introduced is approved on the condition that the customer approves the result of the simulation. As a result, since it is possible to cause the customer to reliably recognize the result of the simulation of the facility to be introduced, and to suppress occurrence of a request for changing the facility due to a difference in recognition by the customer after the introduction of the facility, it is possible to more smoothly perform the introduction of the facility.

### Brief Description of Drawings

Fig. 1 is a configuration diagram schematically illustrating a configuration of facility introduction assisting system 10.
Fig. 2 is an explanatory diagram schematically illustrating marketplace MP.
Fig. 3 is a configuration diagram schematically illustrating a configuration of work system 60.
Fig. 4 is an explanatory diagram illustrating an example of module DB 30.
Fig. 5 is a sequence diagram illustrating an example of processing performed by management server 20, vendor terminal 40, and customer terminal 50.
Fig. 6 is an explanatory diagram illustrating an example of information stored for each item No..
Fig. 7 is an explanatory diagram illustrating an example of a proposal screen.
Fig. 8 is an explanatory diagram illustrating an example of log information.
Fig. 9 is an explanatory diagram illustrating an example of an approval screen.

### Description of Embodiments

Next, embodiments of the present disclosure will be described with reference to the drawings.

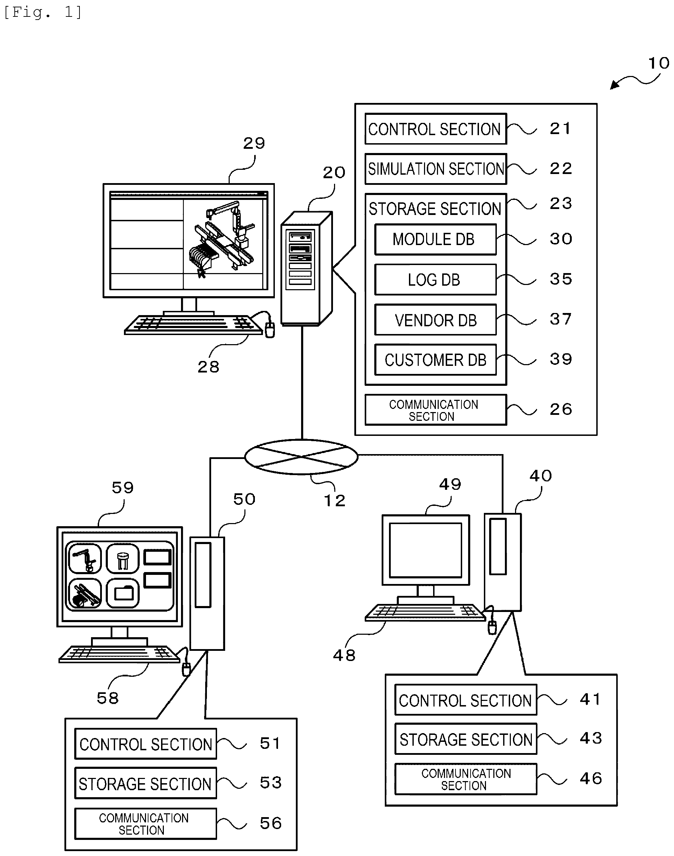

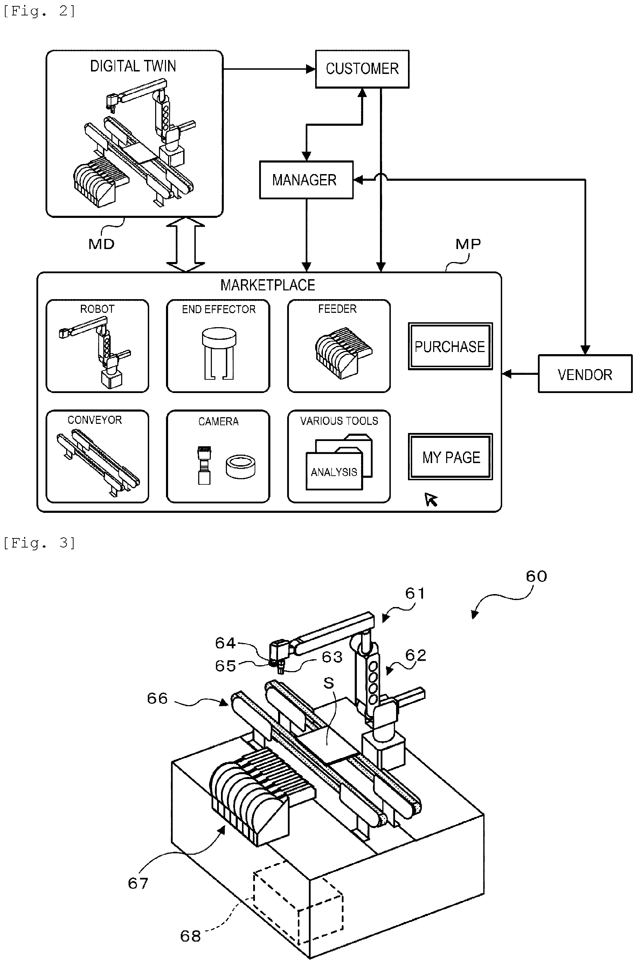

Fig. 1 is a configuration diagram schematically illustrating a configuration of facility introduction assisting system 10 according to the present embodiment, Fig. 2 is an explanatory diagram schematically illustrating marketplace MP, and Fig. 3 is a configuration diagram schematically illustrating a configuration of work system 60. As illustrated in Figs. 1 and 2, facility introduction assisting system 10 includes management server 20 that manages marketplace MP for a customer to purchase various facilities and devices (hereinafter, referred to as modules) provided by a vendor. In facility introduction assisting system 10, management server 20 is connected to vendor terminal 40 and customer terminal 50 via network 12. Although one vendor terminal 40 and one customer terminal 50 are illustrated in Fig. 1, actually, multiple vendor terminals 40 and multiple customer terminals 50 are connected to each other.

Management server 20 includes control section 21, simulation section 22, storage section 23, and communication section 26. Control section 21 includes a CPU, a ROM, a RAM, or the like, and controls the entire server such as management of marketplace MP. simulation section 22 builds model MD (digital twin, refer to Fig. 2) such as work system 60 (refer to Fig. 3) in which modules that can be purchased by marketplace MP are combined in the virtual space, and executes simulation using model MD in the virtual space. Storage section 23 is configured by an HDD or the like, and stores various application programs, various databases (DBs), or the like. Communication section 26 is connected to network 12 or the like, and communicates with vendor terminal 40, customer terminal 50, or the like. Various instructions or the like by a manager are inputted to management server 20 from input section 28 such as a keyboard and a mouse. In addition, management server 20 displays various information on display section 29 such as a display. Management server 20 is not limited to include simulation section 22 or storage section 23 (various DBs), and the simulation section may be configured as a separate device from management server 20, or the data server storing various DBs may be configured as a separate device from management server 20.

Vendor terminal 40 includes control section 41 having a CPU, a ROM, a RAM, or the like, storage section 43 such as HDD for storing various application programs or various data, and communication section 46 connected to network 12 or the like to communicate with management server 20 or the like. Various instructions or the like by the vendor are inputted to vendor terminal 40 from input section 48 such as a keyboard and a mouse. Moreover, vendor terminal 40 displays various information such as a registration screen for registering the module data of the module which is a provision target in marketplace MP on display section 49 such as a display.

Similar to vendor terminal 40, customer terminal 50 includes control section 51, storage section 53, and communication section 56. Communication section 56 may communicate with control device 68 of work system 60 described later via network 12 or the like. Various instructions or the like by the customer are inputted to customer terminal 50 from input section 58 such as a keyboard and a mouse. In addition, customer terminal 50 displays various information such as a top screen (purchase screen) of marketplace MP, model MD of the simulation, and an execution result of the simulation on display section 59 such as a display.

Here, an example of work system 60 in which modules that can be purchased by marketplace MP are combined will be described. For example, work system 60 can be configured as a system for performing a predetermined operation by robot 61, and in the example illustrated in Fig. 3, in addition to robot 61, board conveyance device 66 and feeder 67 are provided. For example, examples of the predetermined operation include a mounting work or the like in which a workpiece such as a mechanical component or an electronic component is picked up by robot 61 and mounted on board S. Robot 61 includes vertical articulated type robot arm 62 and control device 68 that controls the entire system including an operation of robot arm 62. Moreover, in addition to end effector 63 serving as a work tool being detachably attached to a distal link of robot arm 62, camera 64 for imaging an image and lighting 65 such as a ring light disposed coaxially with camera 64 are attached to the distal link. Examples of end effector 63 include an electromagnetic chuck, a mechanical chuck, a suction nozzle, or the like. Board conveyance device 66 conveys board S by a pair of belt conveyors. Feeder 67 is configured as a tape feeder that feeds a tape in which multiple workpieces are accommodated at predetermined intervals. Feeder 67 is not limited to the tape feeder, and may be a tray feeder or the like that supplies a tray on which the multiple workpieces are disposed. Control device 68 is configured by a CPU, a ROM, an HDD, a RAM, or the like, and stores a system program or the like for managing entire work system 60 in addition to an operation program of robot 61. Moreover, although not illustrated, an operation program of board conveyance device 66 is stored by a Programmable Logic Controller (PLC) of board conveyance device 66, and an operation program of feeder 67 is stored by a PLC of feeder 67. Each of robot 61 (robot arm 62), end effector 63, camera 64, lighting 65, board conveyance device 66, and feeder 67 constituting work system 60 is referred to as a module or modules.

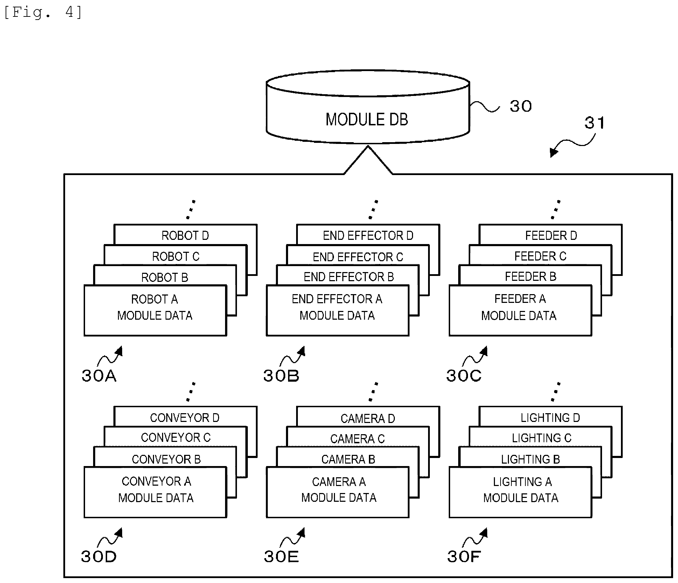

Storage section 23 of management server 20 stores module DB (database) 30 illustrated in Fig. 4, log DB 35, vendor DB 37, and customer DB 39. Although details will be described later, log DB 35 registers log information in which an exchange between the customer and the vendor or the like is associated with date and time information. Although not illustrated, vendor DB 37 registers a name of a vendor for which authentication registration has been performed, a vendor ID unique to each vendor, contact information such as an e-mail address and an address, information on a type of a module provided by the vendor, and the like. In addition, although not illustrated, customer DB 39 registers a name of the customer for whom authentication registration has been performed, a customer ID unique to each customer, contact information such as an e-mail address and an address, a purchase history of the customer, or the like. In addition to these, storage section 23 may store an introduction record DB or the like in which information on an introduced module that has been introduced to the customer, information on work to be handled by the module, information on a work content to be performed by the module, and the like are registered.

Module DB 30 registers module data or the like registered by the vendor from vendor terminal 40 via the registration screen, and multiple module data 31 are registered for each type of module. For example, multiple module data 31 are divided into robot data 30A, end effector data 30B, feeder data 30C, conveyor data 30D, camera data 30E, and lighting data 30F as illustrated in Fig. 4 and registered. In robot data 30A, module data of robot arm 62 (robot A) or module data of other various robots B to D is registered. The various robots may be a horizontal articulated type robot or a parallel link type robot in addition to a vertical articulated type robot. These module data include shape data such as three-dimensional CAD data of each of robots A to D, an operation program, or the like. Similarly, module data including shape data of end effector 63 (end effector A) detachable from robot A or other types of end effectors B to D detachable from robots A to D are registered in end effector data 30B. In addition, module data including shape data or operation programs of feeder 67 (feeder A) and other types of feeders B to D are registered in feeder data 30C. Module data including shape data, operation programs, or the like of conveyor A or other types of conveyors serving as board conveyance device 66 are registered in conveyor data 30D. Module data including shape data, specifications, or the like of camera 64 (camera A) or other types of cameras B to D are registered in camera data 30E. Module data including shape data, specifications, or the like of lighting 65 (lighting A) or other types of lighting B to D are registered in lighting data 30F. In addition, although not illustrated, module data including shape data, physical property data, or the like of a representative workpiece of a work target are also registered in module DB 30. The module data of the workpiece may be registered by a vendor or a manager requested by a customer, and is used in the simulation using model MD.

On a top screen of marketplace MP displayed on customer terminal 50 or the like, purchase requests and browsing of these modules, purchase requests or browsing of various tools, login to the customer's My page, or the like can be made. As illustrated in Fig. 2, for example, icons or tool icons for respective types of modules such as a robot, an end effector, a feeder, a conveyor, and a camera (here, including lighting), a purchase button, a login button to My page, and the like are displayed on the top screen. When the customer selects an icon of a desired module after operating (clicking) the purchase button by an operation input using input section 58, a module selection screen (not illustrated) for displaying a list of the relevant type of module data in a selectable manner is displayed. For example, when the customer selects the icon of the robot, each module data 31 of robots A to D is displayed in a list, and thus, the customer can select and purchase a necessary module from module data 31. It should be noted that the module data displayed in a list is registered in module DB 30. In addition, when the customer selects the icon of the tool after operating the purchase button, a tool selection screen (not illustrated) that displays a list of various tools in a selectable manner is displayed. The customer can select and purchase a necessary tool from among the tools. Examples of the various tools include an analysis tool that collects and analyzes information such as an operation status of each module or a frequency of abnormality occurrence, a proposal tool that proposes an improvement proposal such as changing a module from an analysis result, a layout tool that efficiently lays out a module, or the like. It should be noted that the customer can select the icon of the module or the icon of the tool without clicking the purchase button to browse the contents of the modules or the tools displayed in a list. In addition, when the customer logs in to the My Page, it is possible to confirm a purchase history of the module, content and change history of the module to be introduced, contact matters from management server 20 or the vendor, or the like.

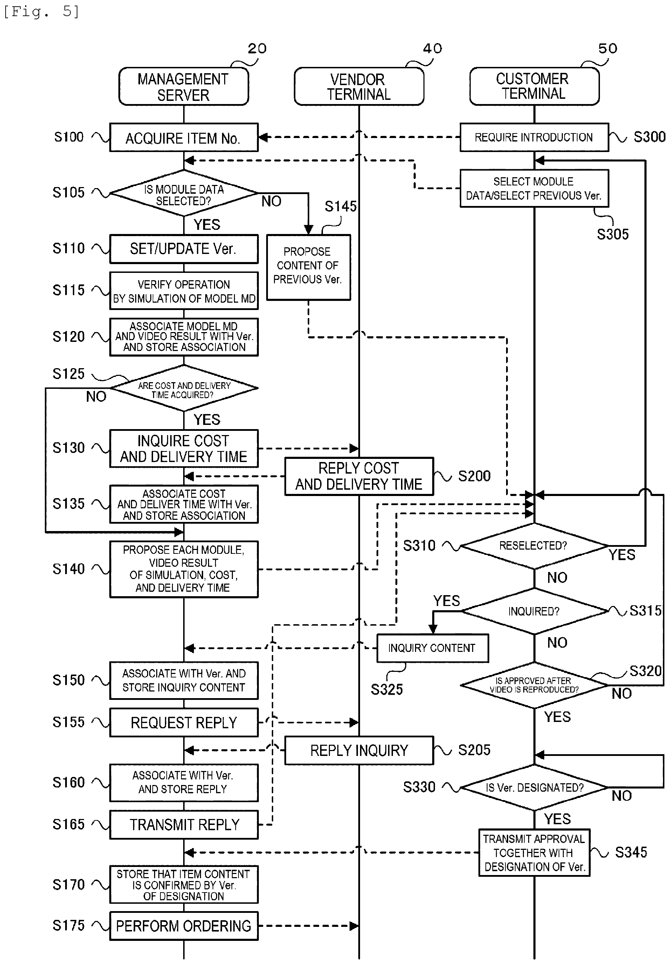

Next, processing of facility introduction assisting system 10 configured as described above, particularly processing when the customer selects and purchases the module using marketplace MP will be described. Fig. 5 is a sequence diagram illustrating an example of processing performed by management server 20, vendor terminal 40, and customer terminal 50. The customer clicks the purchase button from the top screen of marketplace MP displayed on display section 59 to request the introduction (purchase) of the module (S300), and selects the module data which is a purchase target from the module selection screen or a previous Ver. (S305). The processing in which the customer selects the previous Ver. will be described later. In addition, the present invention is not limited to the configuration in which the customer selects the module, and control section 21 of management server 20 may automatically select the module. For example, control section 21 may receive the information on the work to be handled by the module or the information on the work content to be performed by the module from the customer, and control section 21 may automatically select a module having a high degree of similarity to the received information from introduction record DB.

When control section 21 of management server 20 receives an introduction request from the customer, control section 21 acquires the item No. corresponding to the introduction request (S100). Next, control section 21 determines whether the module data has been selected by the customer in S305 (S105), and when it is determined that the module data has been selected, control section 21 initially sets the Ver., which is history information of alteration, to Ver.1 or the like (S110), for example. Subsequently, control section 21 causes simulation section 22 to execute the simulation using model MD of the selected module to verify the operation (S115), and associates video results of model MD and the simulation with the Ver. and stores the association in storage section 23 (S120). Subsequently, control section 21 determines whether it is necessary to acquire a cost (estimate) and a delivery time (S125). In S125, when the simulation is executed using model MD including the newly selected module data, control section 21 determines that the cost and the delivery time need to be acquired. When control section 21 determines that the acquisition of the cost and the delivery time is necessary, control section 21 transmits an inquiry about the cost and the delivery time to vendor terminal 40 (S130).

When the vendor receives the inquiry from management server 20, the vendor transmits a reply about the cost and the delivery time to management server 20 via vendor terminal 40 (S200). It should be noted that in a case where the module is provided from multiple vendors, management server 20 transmits the inquiry to each vendor, and each vendor transmits the reply of the cost and the delivery time.

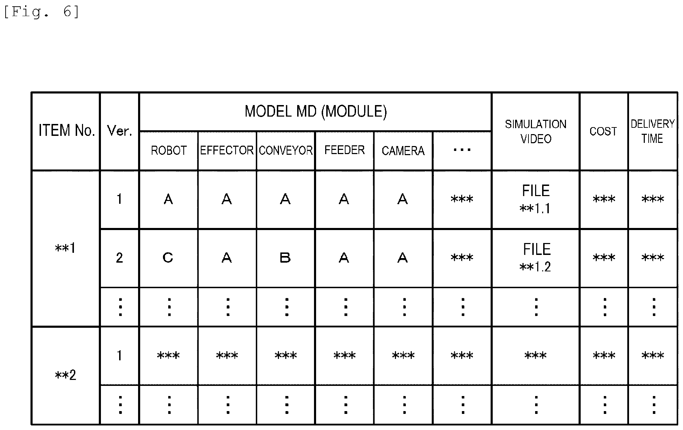

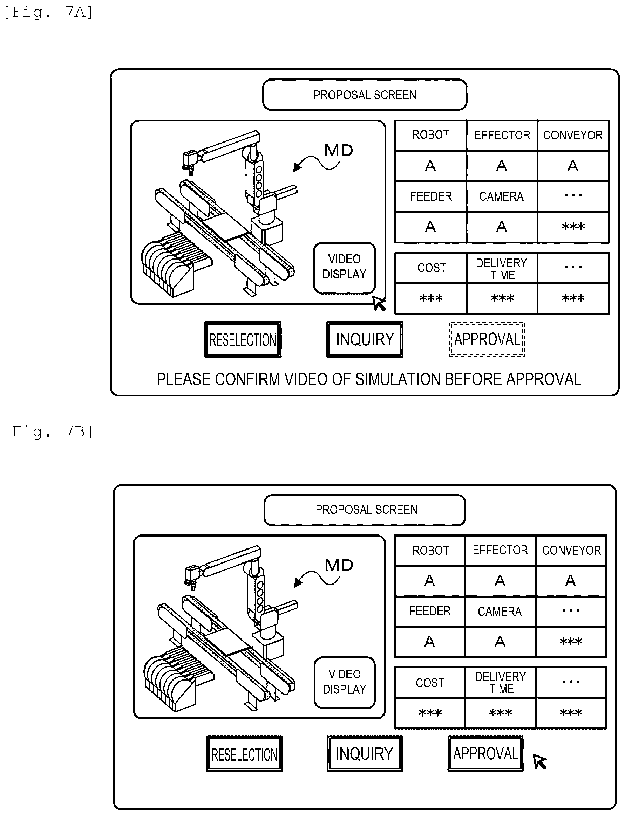

When control section 21 of management server 20 receives the reply of to the cost and the delivery time from vendor terminal 40, control section 21 associates the received cost and delivery time with the Ver. of the corresponding item No. and stores the association in storage section 23 (S135). Here, Fig. 6 is an explanatory diagram illustrating an example of information stored for each item No.. As illustrated in Fig. 6, information of each module constituting model MD, a file of the video result of the simulation, the cost, and the delivery time associated with the Ver. of the item No. are stored. It should be noted that the information of each module and the file of the video result of the simulation are stored in S115. In addition, when control section 21 determines in S125 that the acquisition of the cost and the delivery time is not necessary, control section 21 skips S130 and S135. Subsequently, control section 21 proposes the video result of the simulation, the cost, and the delivery time to the customer (S140). In S140, control section 21 transmits a notification indicating that a proposal preparation is completed to the customer, and when the customer accesses, control section 21 displays a proposal screen of Fig. 7 on display section 59 of customer terminal 50 or the like to perform the proposal on the customer.

An image of model MD in which modules to be introduced are combined, a list of modules to be introduced, information on the cost and delivery time of model MD are displayed on the proposal screen of Fig. 7, and a video display button, a reselection button, an inquiry button, an approval button, and the like are displayed on the proposal screen. When the video display button is operated by the customer, the video result of the simulation using the model MD is reproduced. When the reselection button is operated by the customer, a screen in which each module is displayed with an icon in the same manner as the top screen is displayed in order to cause the customer to reselect the module. When the inquiry button is operated by the customer, an inquiry screen for consulting the manager or the vendor about the selection of the module or inquiring about the specification of the module is displayed. When the approval button is operated by the customer, the proposed content is approved. Before the video result of the simulation is reproduced, as illustrated in Fig. 7A, the video display button is displayed in color and the approval button is not validated so that the approval button cannot be operated. Moreover, a message prompting the user to confirm the video of the simulation before the approval is also displayed. After the video result of the simulation is reproduced, as illustrated in Fig. 7B, the colored display of the video display button is canceled, the approval button is validated, the approval button can be operated, and the message described above is also erased. As described above, in order to perform the approval operation, the customer is required to reproduce and confirm the video result of the simulation.

In a state where the proposal screen is displayed on display section 59, control section 51 of customer terminal 50 waits until the reselection button is operated (S310), the inquiry button is operated (S315), or the approval button is operated after the video result of the simulation is reproduced (S320). When the reselection button is operated in S310, control section 51 returns to S305. In S305, the reselection of the module data from the customer is received or the selection of the previous Ver. is received. In addition, when the inquiry button is operated in S315, control section 51 transmits the inquiry content of the customer inputted to the inquiry screen (not illustrated) to management server 20 (S325).

When the module data is reselected in S305, in S110 to S120, control section 21 of management server 20 updates the Ver. of the item No., performs simulation with new model MD, associates new model MD and the video result of the simulation with the Ver. after the update, and stores the association (refer to Fig. 6). In addition, when it is necessary to acquire the cost and delivery time in accordance with the reselection of the module data, control section 21 inquires of the vendor in S130 and S135 to acquire the cost and delivery time, associates the cost and delivery time with the updated Ver., and stores the association (refer to Fig. 6). In the present embodiment, storage section 23 holds not only the data of the updated Ver. but also the data of the previous Ver.. Then, control section 21 re-proposes the content of the Ver. updated in S140 to the customer. In addition, when the previous Ver. is selected in S305, control section 21 determines in S105 that new module data has not been selected and reads the content of the selected previous Ver. from storage section 23 to propose the content to the customer (S145). Accordingly, the customer can easily confirm the video result of the simulation of the previous Ver. or the like.

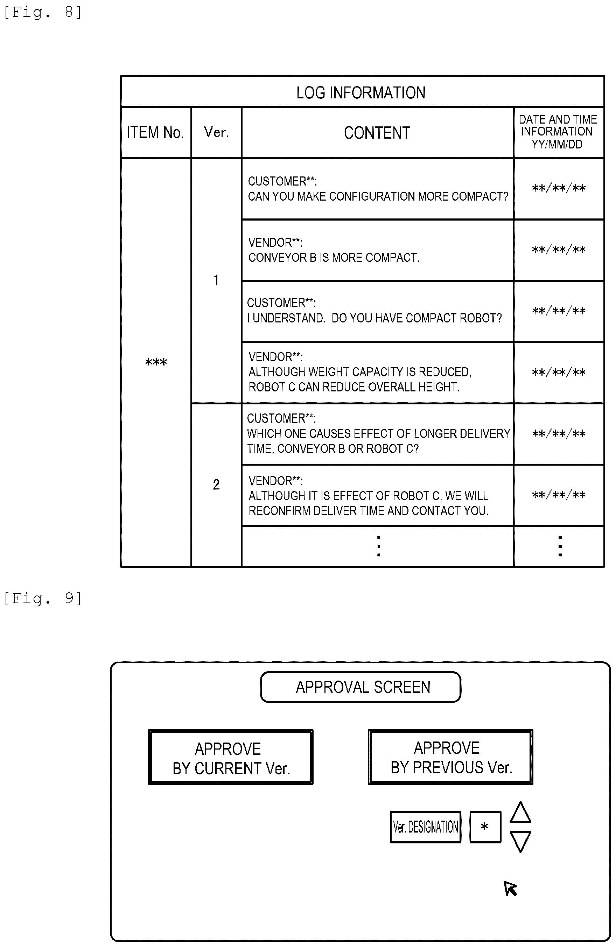

In addition, when control section 21 receives the inquiry content in S325, control section 21 associates the inquiry content with the Ver. of the item No. and stores the inquiry content together with date and time information (S150), and when the inquiry is made to the vendor, control section 21 transmits the inquiry content to vendor terminal 40 to request the reply (S155). It should be noted that when the inquiry content is for the manager, the manager may reply without requesting the reply from the vendor. The vendor that has received the request in S155 transmits the reply to the inquiry via vendor terminal 40 (S205). When control section 21 receives the reply in S205, control section 21 associates the reply with the Ver. of the item No., stores the association together with the date and time information (S160), and transmits the reply to customer terminal 50 (S165). Here, control section 21 stores the inquiry content and the reply as log information in log DB 35 of storage section 23. Fig. 8 is an explanatory diagram illustrating an example of the log information. As illustrated in Fig. 8, the inquiry of the customer, the reply of the vendor, and the date and time information thereof associated with the Ver. of the item No. are stored.

While repeating the processing, when the approval button is operated after the reproduction of the video result of the simulation in S320, control section 51 of customer terminal 50 waits for approval according to designation of the Ver. on an approval screen (S330). Here, Fig. 9 is an explanatory diagram illustrating an example of the approval screen. This approval screen is displayed on display section 59 of customer terminal 50 when the approval button is operated on the proposal screen in Fig. 7. On the approval screen, as illustrated, it is possible to whether the customer designates and approves the current Ver. or designates and approves the previous Ver.. In addition, the customer operates an up/down button and can arbitrarily designate the previous Ver.. When the approval is performed according to the designation of the Ver., the approval of the customer is transmitted to management server 20 together with the designation of the Ver. (S345).

When control section 21 of management server 20 receiving the approval, control section 21 of management server 20 stores that the content of the item is confirmed by the Ver. of the designation (S170), and performs ordering processing for ordering the necessary module for the vendor (S175). Although details of the subsequent processing will be omitted, the vendor sends the ordered module to the customer or installs the module at a delivery destination and introduces the module to the customer. Since the customer approves the module to be introduced after confirming the video of the simulation, it is possible to suppress occurrence of a request for changing the module from the customer for a reason such as the operation being different from the image after the introduction.

Here, correspondence relationships between components of the present embodiment and components of the present disclosure will be clarified. Facility introduction assisting system 10 of the present embodiment corresponds to a facility introduction assisting system, control section 21 of management server 20 that receives the introduction request in S300 corresponds to a receiving section, control section 21 and simulation section 22 of management server 20 that execute S115 correspond to a simulation section, control section 21 of management server 20 that executes S140 corresponds to a proposal section, and control section 21 of management server 20 that executes S170 that receives the approval via the approval screen of Fig. 9 corresponds to an approval section. Moreover, control section 21 of management server 20 that executes S100, S110, and S120 corresponds to a management section. In addition, storage section 23 of management server 20 that stores the log information of S150 and S160 corresponds to a storage section.

Facility introduction assisting system 10 described above proposes to the customer the module to be introduced together with the video result of the simulation using the model MD of the module to be introduced, and approves the introduction of the module to be introduced on the condition that the customer approves the video result of the simulation. Therefore, after the introduction of the module, it is possible to suppress occurrence of a request for changing the module due to a difference in recognition by the customer or the like, and thus, it is possible to more smoothly perform the introduction of the module.

Moreover, facility introduction assisting system 10 updates the Ver. of the item No. whenever the content change such as reselection of the module is received, associates the video result of the simulation and the module (model MD) with the Ver., and stores the association. Therefore, it is possible to cause the customer to confirm the video result of the simulation corresponding to not only the latest Ver. but also the previous Ver.. In addition, facility introduction assisting system 10 can acquire the designation of the Ver. from the customer when the customer approves the video result of the simulation, and thus, the customer can appropriately introduce the module associated with the Ver. designated by the customer. In addition, facility introduction assisting system 10 proposes to the customer together with the cost and the delivery time related to the module requested to be introduced, and thus, each customer can introduce an appropriate facility according to a requested item. In addition, facility introduction assisting system 10 stores log information in which the exchange between the customer and the vendor is associated with the date and time information, and thus, the customer can confirm the history of the content change or the like when the module is introduced, for example, after the introduction of the module.

It is needless to say that the present disclosure is not limited to the embodiments described above, and may be implemented in various aspects as long as they belong to a technical scope of the present disclosure.

For example, the log information is stored in the above embodiment. However, the configuration is not limited to this, and the log information may not be stored.

In the above embodiment, the cost and the delivery time are together proposed to the customer. However, the configuration is not limited to this, and at least one of the items of the introduction cost, the work ability, the installation area, the introduction delivery time, and the vendor may be proposed to the customer. Examples of the information on the work ability include, for example, information on an operation speed, an operation range, a weight capacity, a positional accuracy, or the like of robot arm 62, a conveyance speed, weight capacity of board conveyance device 66, a supply speed of feeder 67, and the like. Moreover, the installation area may be a floor area necessary for installation when each module is combined and introduced. Alternatively, it is only necessary to propose the module to be introduced and the video result of the simulation without proposing the items.

In the embodiments described above, the designation of the Ver. is acquired when the customer approves. However, the configuration is not limited to this, the designation of the Ver. may not be acquired. In the case, the module associated with the Ver. of the content proposed by management server 20 in S140 and S145 may be approved.

In the above embodiments, not only the latest Ver. of the item No. but also the previous Ver. can be referenced. However, the configuration is not limited to this, when the Ver. is updated, the information on the previous Ver. may be deleted and only the latest Ver. may be referred.

In the above embodiments, work system 60 configured by multiple modules including robot 61 is exemplified. However, the configuration is not limited to this, and the work system may not include robot 61 as long as the work system is a system configured by multiple modules. In addition, the present invention is not limited to a case where multiple modules are proposed at a time. That is, only one module may be proposed.

Here, the facility introduction assisting system of the present disclosure may be configured as follows. For example, the facility introduction assisting system of the present disclosure, the facility introduction assisting system may include a management section configured to assign and manage an item number to the introduction request from the customer, in which the receiving section may receive a content change from the customer with respect to the proposal, the simulation section may perform the simulation using a model of the facility after the content change when the content change with respect to the proposal is received, and when the content change with respect to the proposal is received, the management section may update history information on the item number and associate the facility after the content change and the result of the simulation of the facility with the history information to manage the item. As a result, since it is possible to cause the customer to refer to the result of the simulation corresponding to not only the latest history information but also the previous history information, it is possible to cause the customer to more appropriately consider the introduction of the facility.

In the facility introduction assisting system of the present disclosure, the approval section may acquire a designation of the history information from the customer when the customer approves the result of the simulation, and approve introduction of the facility to be introduced associated with the designated history information. As a result, it is possible to appropriately introduce a facility corresponding to the history information designated by the customer.

In the facility introduction assisting system of the present disclosure, the proposal section may propose to the customer at least one of items of an introduction cost, a work ability, an installation area, an introduction delivery time, and a vendor related to the facility to be introduced. As a result, each customer can introduce an appropriate facility corresponding to the requested item.

In the facility introduction assisting system of the present disclosure, the facility introduction assisting system may include a storage section connected to an information terminal of the customer and an information terminal of a vendor of the facility via a network and configured to store log information in which an exchange between the customer and the vendor is associated with date and time information. As a result, the customer can confirm the history of the content change or the like when the facility is introduced, for example, after the introduction of the facility.

### Industrial Applicability

The present disclosure can be applied to a manufacturing industry of a facility introduction assisting system or the like.

### Reference Signs List

10: Facility introduction assisting system, 12: Network, 20: Management server, 21, 41, 51: Control section, 22: Simulation section, 23, 43, 53: Storage section, 26, 46, 56: Communication section, 28, 48, 58: Input section, 29, 49, 59: Display section, 30: Module DB, 30A: Robot data, 30B: End effector data, 30C: Feeder data, 30D: Conveyor data, 30E: Camera data, 30F: Lighting data, 31: Module data, 35: Log DB, 37: Vendor DB, 39: Customer DB, 40: Vendor terminal, 50: Customer terminal, 60: Work system, 61: Robot, 62: Robot arm, 63: End effector, 64: Camera, 65: Lighting, 66: Board conveyance device, 67: Feeder, 68: Control device, MD: Model, MP: Marketplace, S: Board

## Claims

1. A facility introduction assisting system for providing assist when a customer introduces a facility, the facility introduction assisting system comprising:
a receiving section configured to receive an introduction request of the facility from the customer;
a simulation section configured to perform a simulation using a model of the facility in a virtual space;
a proposal section configured to propose to the customer a facility to be introduced together with a result of a simulation including a video of the model in the simulation; and
an approval section configured to approve introduction of the facility to be introduced on a condition that the customer approves the result of the simulation.

2. The facility introduction assisting system according to claim 1, further comprising:
a management section configured to assign and manage an item number to the introduction request from the customer,
wherein the receiving section receives a content change from the customer with respect to the proposal,
the simulation section performs the simulation using a model of the facility after the content change when the content change with respect to the proposal is received, and
when the content change with respect to the proposal is received, the management section updates history information on the item number and
associates the facility after the content change and the result of the simulation of the facility with the history information to manage the item.

3. The introduction facility assisting system according to claim 2,
wherein the approval section acquires a designation of the history information from the customer when the customer approves the result of the simulation, and approves introduction of the facility to be introduced associated with the designated history information.

4. The facility introduction assisting system according to any one of claims 1 to 3, wherein the proposal section proposes to the customer at least one of items of an introduction cost, a work ability, an installation area, an introduction delivery time, and a vendor related to the facility to be introduced.

5. The facility introduction assisting system according to any one of claims 1 to 4, further comprising:
a storage section connected to an information terminal of the customer and an information terminal of a vendor of the facility via a network and configured to store log information in which an exchange between the customer and the vendor is associated with date and time information.
